# DEMANDE DE BREVET EUROPEEN

(11) **EP 4 012 579 A1**
(43) Date de publication de la demande: **15.06.2022**
(21) Numéro de dépôt: 20306559.4
(22) Date de dépôt: 14.12.2020
(51) Int. Cl.: G06F 16/587, G06F 16/29

(54) **APPAREIL GÉOMATIQUE AYANT UNE ARCHITECTURE DE CALCULATEUR UTILISANT LES UTILITAIRES OSMOSIS ET GDAL**

(71) Demandeur: Atos Integration, 95870 Bezons (FR)
(72) Inventeur: AILLERES, Christophe, 31450 LABASTIDE BEAUVOIR (FR)
(74) Mandataire: Novagraaf Technologies

(57) **Abrégé**

La présente invention a pour objet un appareil géomatique (2) ayant une architecture de calculateur utilisant les utilitaires Osmosis, pour l'application JAVA, en ligne de commandes pour la manipulation de données OSM, et GDAL, pour la génération de courbes de niveaux, et comprenant au moins un écran, une mémoire de stockage gérant une base de données et au moins un processeur fonctionnant sous Unix, l'architecture étant organisée en micro-services sous un logiciel libre de type « Docker » fonctionnant sous Linux permettant de virtualiser des environnements et de lancer des applications créées dans des conteneurs logiciels, et utilisant pour les besoins de l'application de cartographie au moins six conteneurs exécutables pouvant être développés en JAVA.

## Description

### DOMAINE TECHNIQUE ET OBJET DE L'INVENTION

La présente invention concerne un appareil géomatique permettant la production de cartes ou de photos visualisables sur un terminal mobile.

Un problème dans le domaine de la Géomatique concerne la visualisation de cartes ou de vue des photos détaillées couvrant de grandes parties de territoire sur un terminal mobile. Par terminal mobile, on entend tout équipement mobile ou portable permettant le traitement et l'échange de données, tels que par exemple les téléphones intelligents dits « smartphones », les tablettes tactiles et les appareils de communication avec un central de dispatching utilisés dans les véhicules professionnels pour des besoins professionnels (par exemple les voitures de police, les taxis, les coursiers, les services militaires de logistique, les services d'urgences, etc.). En effet, ces cartes ou images peuvent être disponibles dans un format de fichier donné et atteindre des tailles très importantes, et ne peuvent pas être chargées en mémoire.

### ETAT DE LA TECHNIQUE

Il est connu de l'art antérieur, un format de fichier adapté à l'affichage par découpage de l'image en couches de tuiles de plus en plus détaillées correspondant aux différents niveaux de zoom ou d'agrandissement à afficher.

Cependant, une telle solution présente des inconvénients car la production manuelle de ces fichiers est complexe et demande des connaissances qui réservent leur production à des utilisateurs expérimentés. Les cartes créées à partir d'images, qui peuvent être des plans ou des photos, s'appellent cartes Rasters. Ainsi, les cartes de type plan Raster sont plus précises, proches du rendu d'une carte IGN (Institut national de l'information géographique), mais leurs fichiers sont lourds et elles ne peuvent donc couvrir que des zones plus limitées sur un appareil de type smartphone (téléphone intelligent) compte tenu de la capacité de mémoire limitée de ces appareils. Les cartes de type Photo couvrent également des zones plus limitées car ce sont des photos très détaillées (prises par satellite, drone, etc.). Or, leurs fichiers contiennent un grand nombre de pixels et occupent de grandes tailles mémoire. De ce fait, dans ces formats, le volume des cartes produites reste important, et ne permet pas de couvrir, par exemple, un pays entier. Pour remédier à cela, il faut recourir à un autre type de carte dite carte vectorielle. Les cartes de type vectoriel peuvent couvrir une zone géographique très étendue (par exemple un pays entier), elles ont l'avantage d'être simplifiées car l'information mémorisée est plus abstraite et leurs fichiers sont légers en taille mémoire.

En outre, la création de cartes Rasters avec différents niveaux de zoom et la création de cartes vectorielles intégrant des courbes de niveaux, peuvent se faire par une succession d'étapes mais nécessitent l'utilisation de plusieurs outils demandant une bonne connaissance du domaine des systèmes d'information géographique (SIG) qui permettent de représenter et d'analyser toutes les choses qui existent sur terre ainsi que tous les événements qui s'y produisent, et une expertise pour manipuler différents formats de fichiers tels que .osm, .map, .poly, .pbf, .hgt, .poi. Ceci est hors de portée pour un néophyte.

Enfin, ces cartes Rasters ou vectorielles ne contiennent pas les informations nécessaires pour pouvoir effectuer des recherches d'adresses, ni afficher des points d'intérêt. De plus la construction de cartes nécessite d'être un expert en SIG et de maitriser la manipulation des différents outils tels que QGIS, XnViewMP, GDAL, driver ECW pour GDAL, Mapsforge, Osmosis, l'utilitaire OsmConvert, l'utilitaire Maperitive, pour aboutir à la création de cartes répondant à un besoin professionnel ou spécifique sans consommer trop de temps. En outre, l'appareil doit être simple d'emploi pour permettre à partir de toutes les ressources en format .jpg (c'est-à-dire jpeg, jp2), .ecw, .tif ou .tif + .tfw, d'être capables de générer des fichiers numériques de cartes créées selon les besoins, ces fichiers numériques doivent être associés à leur données d'adresse ou d'altimétrie ou de point d'intérêt, et doivent être peu encombrants afin de pouvoir être exploités par des appareils portables d'exploitation sans que cela nécessite d'être un expert pour savoir le faire. On comprendra aisément que ceci pose un problème technique que le simple profane ou même l'homme de métier ne sait pas résoudre.

Ce but est atteint par un premier aspect de l'invention qui propose un appareil géomatique ayant une architecture de calculateur utilisant les utilitaires Osmosis et GDAL.

### PRESENTATION GENERALE DE L'INVENTION

Pour parvenir à ce résultat, la présente invention concerne un appareil géomatique ayant une architecture de calculateur utilisant les utilitaires Osmosis, pour l'application JAVA en ligne de commandes pour la manipulation de données OSM, et GDAL, pour la génération de courbes de niveaux, et comprenant au moins un écran, une mémoire de stockage gérant une base de données et au moins un processeur fonctionnant sous Unix, l'architecture étant organisée en micro-services sous un logiciel libre de type « Docker » fonctionnant sous Linux permettant de virtualiser des environnements et de lancer des applications créées dans des conteneurs logiciels, et utilisant pour les besoins de l'application de cartographie au moins six conteneurs exécutables pouvant être développés en JAVA parmi lesquels au moins un conteneur « production-module » contenant le code « production-module » de l'application de cartographie permettant d'instancier et/ou de supprimer à la volée des atlas de cartes sous forme de fichiers numériques rassemblés en pyramides de tuiles, ce conteneur permettant de traiter des fichiers sources raster et vectoriels, ainsi que de créer des cartes et des atlas exportables vers les smartphones, Le conteneur « production-module » contenant l'ensemble des scripts permettant de réaliser toutes les opérations de traitement de données cartographiques nécessaires au fonctionnement de l'appareil géomatique, tels que les différents scripts Python, l'utilitaire Osmosis ou les commandes d'appel de certaines fonctionnalités d'Osmosis, ainsi que l'appel de certaines commandes de l'utilitaire GDAL.

Selon une particularité, l'appareil géomatique comprend au moins cinq conteneurs parmi lesquels :
Un conteneur « rest » contenant des services faisant des appels dans un conteneur « postgis » de la base de données,
Un conteneur Interface Homme Machine (IHM) contenant le code « IHM » de l'application permettant de mettre en œuvre des Actions définies telles que 'Ajout' pour ajouter un fichier, 'Supprimer' pour supprimer un fichier, ou encore d'autres Actions telles que communiquer avec le conteneur « rest » pour récupérer puis afficher différentes données ou communiquer avec des sites internet pour récupérer des fichiers de cartographie à ajouter à un fichier défini par la fonctionnalité 'Ajout', Un conteneur « map-tile-server » contenant le code « map-tile-server » de l'application permettant de mettre en œuvre un serveur de tuiles à partir de fichiers vectoriels au format .map pour constituer un fichier numérique contenant un ensemble de fichiers numériques correspondant chacun à une tuile,
Un conteneur « ingestion module » contenant le code « ingestion module » de l'application permettant d'utiliser une commande Unix « inotifywait » (cmd Unix), la commande Unix « inotifywait » étant une fonction d'écoute pour vérifier (Listener checking) l'ajout de données brutes sous forme de nouveaux fichiers dans un répertoire donné (dans le cas présent : /geomatic/depot) ainsi que les métadonnées associées dont les géométries dans la base de données, constituant ainsi un référentiel des données ingérées utilisé pour créer, par agrégation, des cartes,
Un conteneur « postgis » contenant la base de données de l'appareil géomatique (postgres/postgis) permettant d'effectuer le contrôle « check », d'ingérer les fichiers attendus une fois qu'ils sont présents par téléchargement ou au moyen d'une clé USB, en exécutant des commandes spécifiques afin d'importer les fichiers dans le référentiel de l'application,
Un conteneur « log-dispatcher » contenant le code « log-dispatcher » de l'application permettant de surveiller un fichier de log et de le transmettre ligne par ligne au service REST du conteneur « rest ».

Selon une autre particularité, des logs d'info et de debug sont émises entre conteneurs afin de :
Confirmer la réception du .poly,
Informer du lancement du processus d'import du fichier .pbf,
Expliciter l'appel REST réalisé pour mettre à jour la base de données avec import du fichier,
Informer du statut de l'import du fichier (Succès ou Echec ou Attention).

Selon une particularité, le conteneur « production-module » contient un code permettant de mettre en œuvre les étapes du processus de génération de fichiers vectoriels de carte mis en œuvre par l'exécution du code du conteneur « production-module ».

Selon une autre particularité, le code pour mettre en œuvre le processus de génération de fichiers vectoriels comprend une première étape d'enregistrement ou de mise à jour de l'emprise du fichier dans une base de données « postgis » enregistrant les métadonnées associées aux données brutes enregistrées dans des répertoires.

Selon une autre particularité, le code pour mettre en œuvre le processus de génération de fichiers vectoriels comprend une deuxième étape de recherche de fichiers HGT représentant un format d'image Raster pour lesquels les valeurs des pixels ne décrivent pas une couleur d'image mais une hauteur de relief.

Selon une particularité, le code pour mettre en œuvre le processus de génération de fichiers vectoriels comprend une troisième étape de recherche de traits de côtes. Selon une autre particularité, le code pour mettre en œuvre le processus de génération de fichiers vectoriels comprend une quatrième étape de génération de courbes de niveaux à partir des fichiers HGT extraits, au moyen de l'utilitaire GDAL pour générer des isolignes et des données mises à jour dans un fichier .pbf.

Selon une particularité, le code pour mettre en œuvre le processus de génération de fichiers vectoriels comprend une cinquième étape de génération d'un fichier .map pour des courbes de niveau SRTM (Shuttle Radar Topography Mission) au moyen d'une commande « mapfile-writer » de l'utilitaire Osmosis exécutée pour générer un fichier .map à partir des informations SRTM extraites.

Selon une autre particularité, le code pour mettre en œuvre le processus de génération de fichiers vectoriels comprend une sixième étape de fusion d'un fichier OSM de base avec les traits de côtes par exécution de la commande Osmosis « merge » permettant d'obtenir un fichier « fusion.pbf ou poly ».

Selon une particularité, le code pour mettre en œuvre le processus de génération de fichiers vectoriels comprend une septième étape de génération d'un fichier .map au moyen d'une commande « mapfile-writer » de l'utilitaire Osmosis exécutée pour générer un fichier .map à partir du fichier « fusion ».

Selon une autre particularité, le code pour mettre en œuvre le processus de génération de fichiers vectoriels comprend une huitième étape comprenant les sous-étapes suivantes :
La génération d'une base adresse par exécution de multiples scripts Python extrayant les données concernant les villes, les rues et les numéros correspondants à des adresses et réalisant une correspondance géographique entre chacune de ces données,
La génération d'une base adresse SQLite de données relationnelles par exécution du script Python utilisé selon le type de fichier .csv ou .pbf utilisé en entrée,
La génération d'un fichier base adresse OSM transformant les adresses au format OSM en adresses au format SQLite, par exécution du script Python setosmfromadresses.py,
La génération d'un fichier base adresse au moyen d'une commande Osmosis exécutée avec des paramètres spécifiques à la génération du fichier base adresse,
La mise à jour d'un fichier d'adresses et/ou de points d'intérêts (address.poi, par exemple) obtenu par exemple par extraction des données adresses à partir des données vectorielles OSM et/ou grâce à une extraction des données à partir de fichiers standardisés, par exemple de type BAN (Base Adresse Nationale) ou BANO (Base d'Adresses Nationale Ouverte).

Selon une autre particularité, le code pour mettre en œuvre le processus de génération de fichiers vectoriels comprend une neuvième étape de génération d'une base .poi au moyen d'une commande Osmosis exécutée avec des paramètres spécifiques à la génération de la base .poi et par la mise à jour du fichier .poi obtenu grâce au fichier bounds créé à partir de l'enveloppe de l'emprise.

L'invention concerne également un procédé de génération de fichiers numériques vectoriels de carte comprenant un appareil géomatique tel que brièvement décrit ci-dessus.

Selon une particularité, le procédé de génération de fichiers numériques vectoriels de carte comprend les étapes suivantes :
Ajout d'un fichier OSM, .pbf puis .poly, dans un répertoire temporaire « geomatic/tmp/pbf » et « /poly » par action de l'utilisateur avec une Interface Homme-Machine (IHM) de l'appareil géomatique,
Recherche des fichiers HGT en intersection dans toutes les emprises,
Recherche des traits de côtes en intersection dans toutes les emprises,
Génération de courbes de niveaux (CDN) à partir de chaque fichier HGT extrait, le code du conteneur « production-module » lançant l'utilisation de l'utilitaire GDAL qui génère des isolignes,
Génération du fichier .map pour les courbes de niveaux, le code du conteneur « production-module » lançant une commande de l'utilitaire Osmosis « mapfile-writer » dont l'exécution génère un fichier .map à partir des informations SRTM extraites,
Fusion du fichier OSM de base (osm.pbf ou osm.poly) avec les traits de côte par exécution de la commande « merge » de l'utilitaire Osmosis contenue dans le conteneur « production-module » permettant d'obtenir un fichier « fusion.pbf ou fusion.poly »,
Génération du fichier .map par exécution de la commande « mapfile-writer » de l'utilitaire Osmosis permettant de générer un fichier .map à partir du fichier « fusion »,
Génération de la base adresse par le lancement par le conteneur « production-module » de l'exécution de multiples scripts Python,
Génération de la base adresse SQLite par le lancement par le conteneur « production-module » d'un script Python utilisé en fonction du type de fichier (csv ou pbf) en entrée (getaddrfromcsv.py pour csv, ou getaddrfrompbf.py pour pbf),
Génération du fichier base adresse OSM par le lancement par le conteneur « production-module » du script Python setosmfromaddresses.py utilisé pour transformer les adresses au format OSM en adresses au format SQLite,
Génération du fichier base adresse par le lancement par le conteneur « production-module » d'une commande de l'utilitaire Osmosis exécutée avec des paramètres spécifiques à la génération du fichier base adresse « address.poi »,
Lancement par le conteneur « production-module » d'une mise à jour du fichier « address.poi » créés à partir de l'enveloppe de l'emprise,
Génération de la base POI par le lancement par le conteneur « production-module » d'une commande de l'utilitaire Osmosis exécutée avec des paramètres spécifiques à la génération de la base .poi et la mise à jour du fichier.poi créés à partir de l'enveloppe de l'emprise,
Réitération des étapes précédentes si un fichier « osm.poly » est ajouté, suivi par le lancement par le conteneur « production-module » du transfert des fichiers osm.map et address.poi issus des .pbf et .poly dans un répertoire de l'atlas.

L'invention concerne également une méthode ou un procédé de conversion de formats de fichiers vectoriels, par exemple de type .pbf ou de type S57 dans un autre format compatible avec la pyramide de tuiles, comme par exemple en fichiers vectoriels .map comprenant un procédé de génération de fichiers numériques vectoriels de carte pour constituer une pyramide de tuiles, mis en place par un utilisateur n'ayant pas de connaissances spécifiques en Géomatique et utilisant l'appareil géomatique tel que brièvement décrit ci-dessus.

Selon une particularité, la méthode est mise en place par un utilisateur n'ayant pas de connaissances spécifiques en géomatique et utilisant l'appareil géomatique tel que brièvement décrit ci-dessus.

L'invention concerne également l'utilisation d'un ensemble de fichiers numériques constitués à partir des tuiles produites par le procédé tel que brièvement décrit ci-dessus sur un terminal mobile intelligent de type smartphone ou tablette ou PC ou autre.

### PRESENTATION DES FIGURES

D'autres caractéristiques et avantages de l'invention apparaîtront à la lecture de la description détaillée des modes de réalisation de l'invention, donnés à titre d'exemple uniquement, et en référence aux dessins qui montrent :
[Fig. 1] représente un schéma d'un aperçu général du traitement des Rasters selon l'invention.
[Fig. 2] représente un schéma d'un aperçu général du traitement des données vectorielles selon l'invention.

### DESCRIPTION DETAILLE D'UNE FORME DE REALISATION DE L'INVENTION

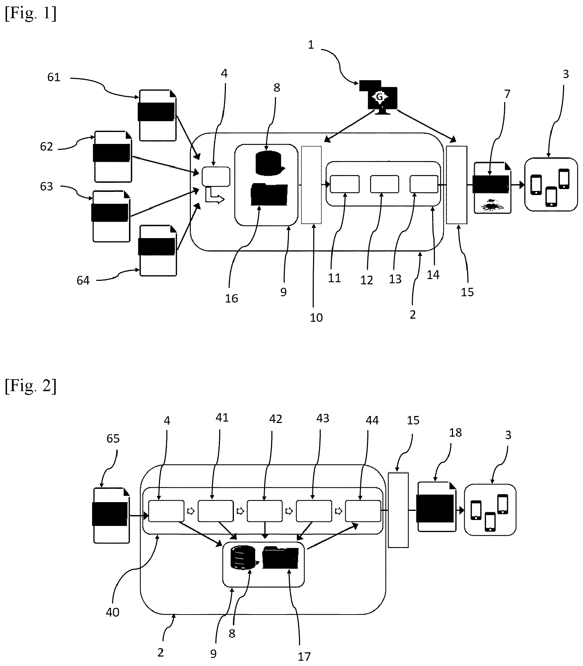

L'appareil géomatique selon l'invention permet donc de transformer les données géographiques brutes dans des formats de données adaptés et utilisables sur un terminal mobile (3), par exemple un téléphone intelligent, dans un mode hors ligne. Ledit appareil géomatique a une architecture de calculateur utilisant les utilitaires Osmosis pour l'application JAVA, en ligne de commandes pour la manipulation de données OSM, et GDAL pour la génération de courbes de niveaux, comme cela est représenté par exemple sur [Fig. 1]. Il comprend au moins un écran, une mémoire de stockage gérant une base de données et au moins un processeur fonctionnant sous Unix.
L'architecture est organisée en micro-services sous un logiciel libre de type « Docker » fonctionnant sous Linux permettant de virtualiser des environnements et de lancer des applications créées dans des conteneurs logiciels, et utilisant pour les besoins de l'application de cartographie au moins six conteneurs exécutables pouvant être développés en JAVA parmi lesquels au moins un conteneur « production-module » contenant le code « production-module » de l'application de cartographie permettant d'instancier et/ou de supprimer à la volée des atlas de cartes sous forme de fichiers numériques rassemblés en pyramides de tuiles (7). Ce conteneur permet de traiter des fichiers sources raster et vectoriels, ainsi que de créer des cartes et des atlas exportables vers les smartphones (15).
Le conteneur « production-module » contient l'ensemble des scripts permettant de réaliser toutes les opérations de traitement de données cartographiques nécessaires au fonctionnement de l'appareil géomatique, tels que les différents scripts Python, l'utilitaire Osmosis ou les commandes d'appel de certaines fonctionnalités d'Osmosis, ainsi que l'appel de certaines commandes de l'utilitaire GDAL.
L'appareil géomatique (2) possède une interface de sources de données qui permet à l'utilisateur (1) de créer des dossiers pour classer des données raster selon leur type, satellite ou plan, et selon leur fournisseur.
Lorsque l'utilisateur (1) copie un fichier raster dans l'un de ces dossiers, un processus d'ingestion (4) est lancé, comme cela est représenté par exemple sur [Fig. 1].
L'extension du fichier raster est contrôlée, elle utilise un format de type "ecw" (61), "tif" (62), "jp2" (63) ou "kap" (64).
Le contenu du fichier raster est analysé par l'utilitaire GDAL.
Le nom du pilote GDAL est extrait pour vérifier le format des données raster.
Une table de couleurs est extraite pour savoir s'il s'agit d'un système de codage informatique des couleurs rouge, vert, bleu (RVB en abrégé) ou d'une gamme de couleurs. Une autre table de couleurs est rejetée.
Les coordonnées de l'emprise du fichier raster sont extraites et projetées en un système de coordonnées de type WGS84 (World Geodetic System 1984 en anglais, système géodésique mondial utilisé par le système de positionnement par satellite GPS).
À partir des coordonnées centroïdes de l'emprise, un code UTM (Universal Transverse Mercator en anglais, Mercator transverse universel en français) définissant un système de coordonnées et une projection, est calculé.
La date du fichier est extraite.
Le fichier est déplacé dans un référentiel (9). Aucune transformation sur les données raster (16) n'ayant eu lieu, celles-ci sont conservées à l'identique.

Les données raster (16) sont sauvegardées dans la base de données (8) de l'appareil géomatique afin d'alimenter le référentiel (9) de sources de données raster (16) disponibles.
Les propriétés du fichier raster (16) sauvegardé sont : le nom complet du fichier ; la date du fichier ; le format ; la taille des pixels de l'image ; le système de référence ; la table des couleurs ; le nombre de bandes ; la zone UTM ; les coordonnées du centroïde ; les coordonnées de l'emprise ; la date d'ingestion.
La progression et la réalisation du processus d'ingestion de données raster sont surveillées via des interfaces utilisateur "Supervision" et "Sources de données" de l'appareil géomatique (2).
L'appareil géomatique (2) comprend au moins cinq conteneurs parmi lesquels :
Un conteneur « rest » contenant des services faisant des appels dans un conteneur « postgis » de la base de données (8),
Un conteneur Interface Homme Machine (IHM) contenant le code « IHM » de l'application permettant de mettre en œuvre des Actions définies telles que 'Ajout' pour ajouter un fichier, 'Supprimer' pour supprimer un fichier, ou encore d'autres actions telles que communiquer avec le conteneur « rest » pour récupérer puis afficher différentes données ou communiquer avec des sites internet pour récupérer des fichiers de cartographie à ajouter à un fichier défini par la fonctionnalité 'Ajout',
Un conteneur « map-tile-server » contenant le code « map-tile-server » de l'application permettant de mettre en œuvre un serveur de tuiles à partir de fichiers vectoriels en format .map pour constituer un fichier numérique contenant un ensemble de fichiers numériques correspondant chacun à une tuile,
Un conteneur « ingestion module » contenant le code « ingestion module » de l'application permettant d'utiliser une commande Unix « inotifywait » (cmd Unix), la commande Unix « inotifywait » étant une fonction d'écoute pour vérifier (Listener checking) l'ajout de données brutes sous forme de nouveaux fichiers dans un répertoire donné (dans le cas présent : /geomatic/depot) ainsi que les métadonnées associées dont les géométries dans la base de données (8), constituant ainsi le référentiel (9) des données ingérées utilisé pour créer, par agrégation, des cartes,
Un conteneur « postgis » contenant la base de données (8) de l'appareil géomatique (postgres/postgis) permet d'effectuer le contrôle « check », d'ingérer les fichiers attendus une fois qu'ils sont présents par téléchargement ou au moyen d'une clé USB, en exécutant des commandes spécifiques exécutées afin d'importer les fichiers dans le référentiel (9) de l'application,
Un conteneur « log-dispatcher » contenant le code « log-dispatcher » de l'application permettant de surveiller un fichier de log et de le transmettre ligne par ligne au service REST du conteneur « rest ».
Des logs d'info et de debug sont émis entre conteneurs afin de :
Confirmer la réception du .poly,
Informer du lancement du processus d'import du fichier .pbf,
Expliciter l'appel REST réalisé pour mettre à jour la base de données (8) avec import du fichier,
Informer du statut de l'import du fichier (Succès ou Echec ou Attention).
Le conteneur « production-module » contient un code permettant de mettre en œuvre les étapes du processus de génération de fichiers vectoriels de carte mis en œuvre par l'exécution du code du conteneur « production-module ».
Lorsque les sources de données sont disponibles, l'utilisateur (1) crée une carte raster à l'aide d'une interface utilisateur "Création de carte" (10), à partir d'une ou plusieurs sources de données du même type (satellite ou plan). Lorsque plusieurs sources de données sont utilisées au même endroit, l'utilisateur (1) peut, par une action de glisser-déposer, modifier l'ordre de combinaison de ces multiples sources de données. Ainsi, lorsque l'utilisateur (1) lance le processus de génération de carte :
Une zone d'intérêt définie par l'utilisateur (1) est contrôlée et enregistrée dans un fichier de forme, c'est-à-dire un format de fichier issu du monde des Systèmes d'Informations Géographiques (SIG). Le processus utilise les fonctions PostgreSQL/PostGIS pour tester si la géométrie est valide, simple et fermée,
Les sources de données Raster sélectionnées qui se recoupent avec la zone d'intérêt sont récupérées et leur nom complet est inscrit, sous forme de liste, dans un fichier temporaire,
Si certaines des données Raster sélectionnées ont une gamme de couleurs particulière, elles sont transformées en table de couleurs RVB via des fonctions GDAL dédiées aux manipulations de bandes Rasters,
Toutes les sources de données sont fusionnées dans l'ordre défini par l'utilisateur (1) via l'outil de fusion GDAL. Un fichier BIGTIFF non compressé est obtenu.

Via l'outil de déformation GDAL, le fichier BIGTIFF est projeté dans un pseudo système de référence Mercator, adapté pour l'affichage à l'écran, puis recadré en fonction du fichier de forme de la zone d'intérêt. Une image déformée, selon le nouveau système de référence, est alors obtenue.
Le code pour mettre en œuvre le processus de génération de fichiers vectoriels (14) comprend une première étape d'enregistrement ou de mise à jour de l'emprise du fichier dans la base de données « postgis » enregistrant les métadonnées associées aux données brutes enregistrées dans des répertoires, une deuxième étape de recherche de fichiers HGT représentant un format d'image Raster pour lesquels les valeurs des pixels ne décrivent pas une couleur d'image mais une hauteur de relief, et une troisième étape de recherche de traits de côtes.
Le code pour mettre en œuvre le processus de génération de fichiers vectoriels (14) comprend également une quatrième étape de génération de courbes de niveaux à partir des fichiers HGT extraits, au moyen de l'utilitaire GDAL pour générer des isolignes et des données mises à jour dans un fichier .pbf, une cinquième étape de génération d'un fichier .map pour des courbes de niveau SRTM (Shuttle Radar Topography Mission) au moyen d'une commande « mapfile-writer » de l'utilitaire Osmosis exécutée pour générer un fichier .map à partir des informations SRTM extraites, une sixième étape de fusion d'un fichier OSM de base avec les traits de côtes par exécution de la commande Osmosis « merge » (11) permettant d'obtenir un fichier « fusion.pbf ou poly », et une septième étape de génération d'un fichier .map au moyen d'une commande « mapfile-writer » de l'utilitaire Osmosis exécutée pour générer un fichier .map à partir du fichier « fusion ».
Le code pour mettre en œuvre le processus de génération de fichiers vectoriels (14) comprend aussi une huitième étape comprenant les sous-étapes suivantes :
La génération d'une base adresse par exécution de multiples scripts Python extrayant les données concernant les villes, les rues et les numéros correspondants à des adresses et réalisant une correspondance géographique entre chacune de ces données,
La génération d'une base adresse SQLite de données relationnelles par exécution du script Python utilisé selon le type de fichier .csv ou .pbf utilisé en entrée,
La génération d'un fichier base adresse OSM transformant les adresses au format OSM en adresses au format SQLite, par exécution du script Python setosmfromadresses.py,
La génération d'un fichier base adresse au moyen d'une commande Osmosis exécutée avec des paramètres spécifiques à la génération du fichier base adresse,
La mise à jour d'un fichier d'adresses et/ou de points d'intérêts (address.poi, par exemple) obtenu par exemple par extraction des données adresses à partir des données vectorielles OSM et/ou grâce à une extraction des données à partir de fichiers standardisés, par exemple, de type BAN (Base Adresse Nationale) ou BANO (Base d'Adresses Nationale Ouverte).
Le code pour mettre en œuvre le processus de génération de fichiers vectoriels (14) comprend enfin une neuvième étape de génération d'une base .poi au moyen d'une commande Osmosis exécutée avec des paramètres spécifiques à la génération de la base .poi et par la mise à jour du fichier .poi créé à partir de l'enveloppe de l'emprise.
Dans certains modes de réalisation, le processus de génération d'adresse est réalisé grâce à un script du type suivant :
Le script Python, de pilotage des générations de données vectorielles, vérifie l'existence d'une url pour le pays sélectionné :
Si l'url est renseignée, un script de type « getaddrfromcsv.py » est lancé, sinon un script de type « getaddrfrompbf.py » est lancé.

Dans certains modes de réalisation, la génération d'une adresse à partir d'un fichier CSV s'effectue de la manière suivante :
Les paramètres d'appel du script sont analysés pour déterminer :
Le fichier à télécharger,
Si le fichier téléchargé contient les entêtes de colonnes,
Si le fichier téléchargé est de type BAN (Banque d'Adresse Nationale) ou BANO (Banque d'Adresse Nationale Ouverte),
Un autre script utilisable, après téléchargement et par configuration, pour remettre les colonnes attendues dans le bon ordre,
Le fichier OSM.pbf à partir duquel il faut récupérer les coordonnées des centres villes au sens « historique »,
La base de données intermédiaire SQLite de travail.
Puis, le fichier CSV est téléchargé.

Enfin, le fichier est lu et pour chaque ligne, en fonction de l'emplacement des colonnes :
Un contrôle de cohérence de la ligne est réalisé sur le nombre de colonnes.
Dans certains modes de réalisation illustratifs et non limitatifs, les données suivantes sont récupérées :
Le nom de la ville,
Le code postal,
Le nom de la rue,
Le complément de rue s'il est disponible,
Le numéro de la rue,
Le complément de numéro de rue s'il est disponible,
Les coordonnées de latitude et de longitude.
Le nom de la ville est recherché dans une base de données temporaire, si il n'existe pas, il est enregistré, si il existe, on récupère son identifiant unique et le compteur du nombre de villes est incrémenté.
De la même façon, le nom de la rue est recherché dans la base de données temporaire, s'il n'existe pas, il est enregistré en relation avec la ville créée ou récupérée. S'il existe, on récupère son identifiant unique et on l'associe à la ville créée ou récupérée. Le compteur du nombre de rues est alors incrémenté.
Le numéro de la rue est recherché dans la base de données temporaire, s'il n'existe pas, il est enregistré en relation avec la rue créée ou récupérée, ainsi que ses coordonnées. S'il existe, on récupère son identifiant unique et on l'associe à la rue créée ou récupérée. Le compteur du nombre de numéros est alors incrémenté. Avantageusement, et de préférence, lorsque toutes les relations entre les villes et les rues, et entre les rues et les numéros sont connues, les boites englobantes des rues et villes sont définies.
Ces boites englobantes sont utilisées ultérieurement pour, lors d'une recherche de ville ou de rue, se placer sur la carte sur le centre de la ville ou de la rue.
Ensuite, une lecture de la base de données SQLite temporaire est réalisée :
Pour toutes les villes, les rues sont récupérées, puis pour toutes les rues, les numéros de rues sont récupérés :
La boite englobante de la rue est de préférence construite à partir de toutes les coordonnées des numéros de telle sortes que ces coordonnées soient incluses dans la géométrie résultante,
De préférence, l'information est alors enregistrée en tant que base de données temporaire pour la rue en cours de traitement.
La boite englobante de la ville est construite à partir de toutes les boites englobantes des rues de telle sortes que ces boites englobantes soient incluses dans la géométrie résultante,
L'information est alors enregistrée sous forme de base de données temporaire pour la ville en cours de traitement.
De préférence, une lecture est avantageusement réalisée, par exemple, via OSMOSIS du fichier OSM.pbf, extrait de GeoFabriks, pour récupérer l'ensemble des centres historiques de toutes les villes, répertoriées sous forme de types, par exemple « métropole », « ville » ou « village », est réalisée :
Pour chaque élément récupéré, une recherche est faite dans la base de données temporaire et si la ville est trouvée, le centre géographique est remplacé par les coordonnées du centre « historique ».
Une base de données relative aux adresses, est générée à partir d'un fichier OSM.pbf. Ensuite, les paramètres d'appel du script sont préférentiellement analysés pour déterminer :
Le fichier OSM.pbf à charger,
La base de données intermédiaire SQLite de travail en sortie.
Le fichier OSM.pbf est lu une première fois via OSMOSIS avec un filtre dédié à
l'extraction de l'ensemble des nœuds dans un fichier pbf intermédiaire.
Le fichier pbf intermédiaire est lu et tous les « nœuds » sont analysés.
Si l'identifiant de nœud n'existe pas dans la base de données temporaire SQLite, on y insère les informations du nœud disponibles.
Les nœuds correspondent, par exemple, à une ville ou une adresse, ou à des coordonnées de rue ou des coordonnées de limite administrative. Cependant, leur caractérisation se fait ensuite selon les étapes suivantes :
Le fichier OSM.pbf est lu une seconde fois via OSMOSIS avec un filtre dédié à l'extraction de l'ensemble des chemins ayant une propriété dite « numéro de rue » dans un fichier pbf intermédiaire.

Dans un exemple illustratif et non limitatif, il s'agit en fait de bâtiments et le chemin correspond à leurs emprises qui sont associées à une rue. L'ensemble des bâtiments existants associés à une rue est alors récupéré.
Le fichier pbf intermédiaire est lu et tous les chemins sont analysés.
Si l'identifiant du chemin, c'est-à-dire du bâtiment, n'existe pas dans la base de données temporaire (par exemple SQLite), alors les informations disponibles du chemin y sont rajoutées.
Puis, pour chacun des nœuds associés au chemin, s'ils n'existent pas dans la base de données temporaire (par exemple SQLite), les informations permettant d'établir la relation entre le nœud lu et le chemin en cours de traitement, y sont rajoutées.
Ainsi, l'ensemble des coordonnées qui composent un bâtiment est récupéré.
Lorsque la table des nœuds est entièrement traitée, c'est-à-dire à partir du moment où les nœuds ont un libellé, étant donné que tous les autres nœuds sans libellés ont été utilisés pour définir les coordonnées d'un bâtiment, alors, la table des nœuds est nettoyée des nœuds devenus inutiles. On obtient donc un filtrage des nœuds inutiles. Le fichier OSM.pbf est lu une troisième fois via OSMOSIS avec un filtre dédié à l'extraction des relations entre les numéros de rues et les rues dans un fichier pbf intermédiaire, de façon à établir une relation entre un bâtiment et une rue.
Pour chaque relation, les éléments de type « rue » et de type « habitation » sont analysés.
Il y a une rue pour plusieurs habitations.
Pour chaque habitation, les coordonnées dans la base de données définissant les coordonnées du centre du bâtiment et, si cela est renseigné, le numéro de rue, sont enregistrées.
Si elle n'existe pas dans la table « habitation », une occurrence est créée.
Cette étape crée un ensemble de numéros de rue avec un identifiant appelé clé dite « étrangère » indiquant qu'elle n'est pas renseignée dans la base de données, et l'identifiant de la rue associée.
Le fichier OSM.pbf est lu une quatrième fois via OSMOSIS avec un filtre dédié à l'extraction des relations entre les limites administratives et les villes.
Pour chaque relation, les membres de type « limites » et la ville principale associée : « admin_centre » sont analysés. Si la ville n'est pas déjà correctement référencée dans la base de données elle est ajoutée à celle-ci.

Les rues qui sont en relation avec ces limites sont analysées, c'est-à-dire celles pour lesquelles au moins une coordonnée se trouve dans les limites administratives.
Cette association est matérialisée en ajoutant l'identifiant de la ville en clé étrangère de la rue.
Lorsqu'une rue est bien associée à une ville, les bâtiments associés sont récupérés et l'adresse définitive avec une clé étrangère est enregistrée, il s'agit de l'identifiant. Seuls les bâtiments associés à une rue elle-même associée à une ville sont gardés en mémoire.
Pour chaque entité de type ville, rue et adresse, les boites englobantes sont affinées. Une fois que la base de données temporaire est créée, un script pour générer un fichier OSM à partir de ces données est invoqué (par exemple de type « setosmfromaddresses.py »).
Ce fichier OSM est recomposé avec :
Les villes sous forme de nœuds,
Les rues sous forme de chemins comprenant une métadonnée associée à l'identifiant d'une ville,
De préférence et avantageusement, les adresses sous forme de nœuds comprenant : une métadonnée associée à l'identifiant d'une rue.
Un plugin Mapsforge de création de POI pour créer le fichier de POI selon les trois catégories ville/rue/adresse (fichier paramètre) est invoqué.
La base SQLite générée est modifiée pour y intégrer une composante d'un module de table virtuelle SQLite de type FTS4 permettant aux utilisateurs d'effectuer des recherches en texte intégral sur des villes, des rues et des adresses.

Grâce à un outil "gdal2mbtiles" conditionné en distribution GDAL, la donnée Raster déformée (12) est quadrillée et transformée en une pyramide d'images (7) adaptée pour un rendu rapide sur les téléphones intelligents (3).
Les images de chaque tuile sont directement enregistrées dans une base de données SQLite qui comprend deux tables : la première contient les métadonnées (Bounding box, tailles de zoom maximum et minimum) des tuiles TMS et la seconde contient des colonnes qui intègrent une image pour une valeur Z, X et Y.

La progression et la réalisation du processus de génération de Raster sont surveillées via des interfaces utilisateur "Supervision" et "Liste de cartes" de l'appareil Géomatique (2).
Lorsque les fichiers cartographiques Raster ont été exportés vers le terminal (3) de l'utilisateur (1), par exemple un téléphone intelligent, de manière sécurisée (validation d'un certificat), ils sont utilisés par le moteur de rendu Raster du terminal (3).
En fonction du niveau d'agrandissement, le moteur de rendu Raster du téléphone intelligent sélectionnera dans les fichiers de cartes Raster (base de données SQLite) les quadrillages qui recoupent la zone délimitée affichée. Les tuiles générées à une petite taille de pixel (256 x 256) permettent un rendu rapide avec peu de traitement. Plusieurs tuiles peuvent contribuer au rendu final des tuiles. La transparence et le chevauchement sont gérés de manière à créer une seule tuile.
Les pyramides de tuiles utilisées pour les données Raster sont affichées par un moteur de rendu de pyramides de tuiles.
Concernant les données vectorielles, elles sont lues par un moteur de rendu d'images, lorsque les fichiers OSM sont copiés dans le dossier dédié de l'appareil géomatique (2), le processus d'ingestion (4) est lancé, comme cela est représenté par exemple sur [Fig. 2] :
Le contenu du fichier OSM est analysé via GDAL pour obtenir une boîte de délimitation de l'emprise,
Le nom du pays du fichier OSM et la boîte de délimitation de l'emprise, dont les coordonnées sont référencées dans le système WGS84, sont enregistrés dans la base de données (8) de l'appareil géomatique (2) pour alimenter le référentiel (9) des sources de données OpenStreetMap (65) disponibles.
L'ingestion (4) de fichiers OSM déclenche automatiquement le processus de transformation des cartes vectorielles qui comprend :
Une carte de base avec génération de lignes de côte (41) :
Les données OSM ne contiennent pas toutes les données nécessaires à l'affichage de cartes utilisables. Les zones terrestres et maritimes sont ajoutées. Ces zones et leurs métadonnées sont fournies par la communauté OSM sous la forme de deux fichiers de forme qui couvrent le monde entier. Un processus d'ingestion spécifique permet d'extraire les données de zones des fichiers de forme et de les sauvegarder dans la base de données (8) référentielle (9) de l'appareil géomatique (2). Lorsqu'un fichier OSM est traité, les zones terrestres et aquatiques qui se croisent avec l'emprise de ce fichier OSM sont extraites et transformées au format OSM. Ainsi, l'outil Osmosis est utilisé pour les fusionner en un seul et même fichier OSM exhaustif.
L'outil Osmosis est utilisé à nouveau pour transformer le résultat de la fusion dans un format adapté au rendu vectoriel. Des règles peuvent être appliquées pour adapter le résultat, telles que filtrer les données, définir les fourchettes de niveaux d'agrandissements d'affichage des données.
Les adresses (42) peuvent être générées de deux manières :
Elles peuvent être fournies sous forme de fichier csv avec un contenu et une structure de données spécifiques : numéro d'adresse, nom de la route, nom du lieu, latitude de l'adresse, longitude de l'adresse.
Elles peuvent aussi être extraites des données OSM en gérant la sémantique et la géométrie des adresses, des routes et des lieux.
Les deux processus fournissent un résultat unique qui est traité pour créer une base de données relationnelle entre les tables d'adresses, de routes et de lieux avec également des données géographiques qui permettent le géocodage, c'est-à-dire obtenir les coordonnées des adresses, des routes, des lieux et, le géocodage inverse, c'est-à-dire obtenir les adresses, les routes, les lieux proches des coordonnées. Le nombre d'adresses disponibles et leurs relations avec les routes et les lieux dépendent directement de l'exhaustivité des données d'entrée.
La génération de point d'intérêts (POI) (42) est effectuée par les données OSM extraites en tant que POI avec les données géographiques requises pour le géocodage inverse.
La génération de graphes de navigation (43) est effectuée par un processus qui fait appel à un outil qui extrait les données routières d'OSM et transforme ces données en fichiers permettant le calcul d'itinéraires en fonction des points de cheminement et des paramètres fournis (mode voiture/piéton ; chemin le plus rapide et le plus court ; etc.). La qualité des calculs d'itinéraire dépend de la qualité des données d'entrée et le calcul d'itinéraire ne peut être traité que si les données de jonction entre tous les segments de la route sont disponibles.
L'altitude est prétraitée, mais n'est pas entièrement utilisable avec le moteur de rendu vectoriel, elle doit également être traitée en fonction des frontières des pays :

Les données d'élévation Raster dans le référentiel qui croisent l'emprise du fichier OSM traité sont fusionnées dans un seul fichier de contour de lignes (44).
Comme le résultat des données d'élévation vectorielles est une interpolation des données d'élévation Raster, il est nécessaire de découper tous les vecteurs qui dépassent les limites terrestres collectées lors de la génération de la carte de base. L'outil d'Osmosis est utilisé pour transformer le résultat dans un format adapté au rendu vectoriel. Des règles peuvent être appliquées pour adapter le résultat, par exemple filtrer les données ou définir le niveau d'agrandissement d'affichage des données.
La progression et la réalisation du processus de génération de vecteurs OpenStreetMap (65) sont surveillées via l'interface utilisateur "Supervision" et "Liste de cartes" de l'appareil géomatique (2).
L'application cartographique du smartphone repose sur le moteur de rendu vectoriel Mapsforge, utilisé pour générer des images, les images étant rendues par le moteur de rendu raster OSMDroid. C'est le même moteur de rendu vectoriel que celui utilisé sur les stations de travail de géomatique. La structure des données vectorielles du fichier Mapsforge est adaptée aux performances de lecture pour pouvoir suivre les déplacements de l'utilisateur sur la carte de façon très fluide.
En fonction du niveau d'agrandissement et de la boîte de délimitation de la zone, les données vectorielles sont lues séquentiellement dans les fichiers "map" et transformées en images qui sont rendues sur la couche de base sous forme de tuiles. Les résultats des données matricielles sont rendus sur cette couche. Pour de meilleures performances, les images calculées sont mises dans une mémoire cache pour une réutilisation ultérieure, pendant une période qui dépend de la taille restante de la mémoire cache.
La transformation des données vectorielles en images repose sur des géométries d'objets, une nouvelle sémantique alimentée avec les données est donc créée, accompagnée de styles correspondants permettant d'obtenir un rendu, par exemple composé de styles et autres paramètres, qui sont fixés lors de la génération de la sémantique tout en restant consultables (voir déterminables dans certains mode de réalisation) par l'opérateur responsable de la génération des cartes. Ces informations concernent par exemple : nœud - point, chemin - ligne, zone fermée - surface, dessinées avec des styles appliqués en fonction de leurs métadonnées et selon la hiérarchie des règles.
Par exemple :
Un objet de type "chemin", avec la clé "voie rapide" et la valeur "piéton" sera rendu sous la forme d'une ligne pointillée serrée de couleur marron clair.
Un objet de type "chemin", avec la clé "voie rapide" et la valeur "autoroute" sera rendu sous la forme de deux lignes épaisses de deux couleurs rouges différentes. Cet objet sera rendu après l'objet "piéton", donc au-dessus de celui-ci.
Selon la géométrie, il est possible d'ajouter des étiquettes ou de symboliser les données par des images (png ou svg).
Il est également possible de filtrer certains types de données pendant le traitement, ou de cacher certains types de données en omettant les styles.
Les données relatives aux POI et aux catégories associées sont intégrées dans une base de données SQLite utilisée par les requêtes SQL de l'interface utilisateur pour afficher les POI en fonction de filtres de catégories et de boîtes de délimitation de la zone affichée actuelle.
Les adresses, les routes et les lieux associés avec leurs données géographiques sont intégrés dans une base de données SQLite utilisée par les requêtes SQL de l'interface utilisateur pour effectuer :
Un géocodage, c'est-à-dire obtenir des coordonnées à partir des adresses, routes, et lieux fournis par l'utilisateur,
Un géocodage inverse, c'est-à-dire obtenir des adresses, des routes, et des lieux proches des coordonnées cliquées à l'écran.

L'invention concerne également la réutilisation du système de production et de rendu de cartes vectorielle afin de générer des cartes marines.
Des fichiers de cartes marines numériques vectorielles S57 sont copiés dans le dossier dédié de l'appareil géomatique (2), le processus d'ingestion (4) est lancé :
Le contenu du fichier S57 est analysé via GDAL pour obtenir la boîte de délimitation de l'emprise et vérifier qu'elle contient des données qui peuvent être transformées,
Si le contenu du fichier S57 est correct, le nom du fichier S57 et la boîte de délimitation de l'emprise (coordonnées dans le système de référence WGS84) sont enregistrés dans la base de données de la station de travail de géomatique pour alimenter son référentiel de sources de données S57 disponibles.
Lors de la création d'une carte, l'insertion d'une référence à une source de données vectorielle de type S57 déclenche automatiquement le processus de création de cartes vectorielles : les données des fichiers S57 sont analysées et transformées en données de type OSM avec une sémantique et un format adaptés, des fichiers OSM sont créés.
L'outil d'Osmosis est utilisé pour transformer le résultat dans un format adapté au rendu vectoriel. Des règles peuvent être appliquées pour adapter le résultat, par exemple le filtrage des données ou définir les fourchettes de niveaux d'agrandissements d'affichage des données.
La progression et la réalisation du processus de génération de vecteurs S57 (40) peuvent être surveillées via l'interface utilisateur "Supervision" et l'interface utilisateur "Liste de cartes" de la station de travail géomatique.
Bien que les styles de rendu pour OpenStreetMap existent déjà, la sémantique pour représenter les données S57 (connue sous le nom de norme S52) étant spécifique, de nouveaux styles et de nouveaux symboles sont définis.
Une fois que les styles et la symbologie adaptés ont été définis, le processus de rendu restant est identique au processus de rendu d'OpenStreetMap.

La présente demande concerne également un procédé de génération de fichiers numériques vectoriels (18) de carte comprenant les étapes suivantes :
Ajout d'un fichier OSM, .pbf et .poly, dans un répertoire temporaire « geomatic/tmp/pbf » et « /poly » par action de l'utilisateur (1) avec une Interface Homme-Machine (IHM) de l'appareil géomatique,
Mise à jour du fichier de l'emprise géographique définie par un polygone par l'utilisation de l'IHM par l'utilisateur et l'enregistrement dans la base de données « postgis »,
Recherche des fichiers HGT en intersection dans toutes les emprises,
Recherche des traits de côtes en intersection dans toutes les emprises,
Génération de courbes de niveaux (CDN) à partir de chaque fichier HGT extrait, le code du conteneur « production-module » lançant l'utilisation de l'utilitaire GDAL qui génère des isolignes et met à jour les données du fichier osm.pbf,
Génération du fichier .map pour les courbes de niveaux, le code du conteneur « production-module » lançant une commande de l'utilitaire Osmosis « mapfile-writer » dont l'exécution génère un fichier .map à partir des informations SRTM extraites,
Fusion du fichier OSM de base (osm.pbf) avec les traits de côte par exécution de la commande « merge » (11) de l'utilitaire Osmosis contenue dans le conteneur « production-module » permettant d'obtenir un fichier « fusion.pbf »,
Génération du fichier .map par exécution de la commande « mapfile-writer » de l'utilitaire Osmosis permettant de générer un fichier .map à partir du fichier « fusion »,
Génération de la base adresse par le lancement par le conteneur « production-module » de l'exécution de multiples scripts Python,
Génération de la base adresse SQLite par le lancement par le conteneur « production-module » d'un script Python utilisé en fonction du type de fichier (csv ou pbf) en entrée (getaddrfromcsv.py pour csv, ou getaddrfrompbf.py pour pbf),
Génération du fichier base adresse OSM par le lancement par le conteneur « production-module » du script Python setosmfromaddresses.py utilisé pour transformer les adresses au format OSM en adresses au format SQLite,
Génération du fichier base adresse par le lancement par le conteneur « production-module » d'une commande de l'utilitaire Osmosis exécutée avec des paramètres spécifiques à la génération du fichier base adresse « address.poi »,
Lancement par le conteneur « production-module » d'une mise à jour du fichier « address.poi » obtenu grâce aux fichiers bounds créés à partir de l'enveloppe de l'emprise,
Génération de la base POI par le lancement par le conteneur « production-module » d'une commande de l'utilitaire Osmosis exécutée avec des paramètres spécifiques à la génération de la base .poi et la mise à jour du fichier.poi obtenu grâce aux fichiers bounds créés à partir de l'enveloppe de l'emprise,

La présente demande concerne également une méthode ou un procédé de conversion de formats de fichiers vectoriels, par exemple de type .pbf ou de type S57 dans un autre format compatible avec la pyramide de tuiles, comme par exemple en fichiers vectoriels .map. Pour cela, la présente demande utilise un procédé de génération de fichiers numériques vectoriels de carte pour constituer une pyramide de tuiles (7), mis en place par un utilisateur (1) n'ayant pas de connaissances spécifiques en Géomatique et utilisant l'appareil géomatique décrit ci-dessus. On notera que les fichiers vectoriels ne sont généralement transformés en tuiles que lors de leur intégration par le moteur de rendu vectoriel Mapsforge. Seuls les fichiers .map sont généralement exploités par ce moteur de rendu, mais il est possible d'y ajouter des données supplémentaires telles que les données SRTM ou S57 à partir du moment où les éléments de styles et les règles sont mises à disposition du moteur de rendu, pour en définir l'affichage.

La présente demande concerne également l'utilisation d'un ensemble de fichiers numériques constitués à partir des tuiles produites par le procédé sur un terminal mobile intelligent de type smartphone ou tablette ou montre connectée ou PC ou autre. Cela présente l'avantage de permettre, grâce aux technologies existantes et à la mise en œuvre de la présente invention, de générer des fichiers utilisables sur des terminaux ou dispositifs à ressources réduites (en terme de capacité de calcul, mémoire, batterie).

L'Homme de métier comprendra donc à la lecture de la présente demande qu'il est désormais possible de générer des cartes compilant divers types de données (rasters, points d'intérêts, vecteurs, altimétries, profondeur marine) tout en conservant une taille restreinte, comme par exemple les fichiers de type osm, .map, .poly, .pbf, .hgt, .poi. Cela permet donc de générer des fichiers téléchargeables sur un dispositif à ressources restreintes, sans pour autant perdre trop d'information lors de la génération des cartes et en restant compatible avec les format de fichiers classiquement utilisés dans le domaine de l'invention.

## Revendications

1. Appareil géomatique (2) ayant une architecture de calculateur utilisant les utilitaires Osmosis, pour l'application JAVA, en ligne de commandes pour la manipulation de données OSM, et GDAL, pour la génération de courbes de niveaux, et comprenant au moins un écran, une mémoire de stockage gérant une base de données et au moins un processeur fonctionnant sous Unix, l'architecture étant organisée en micro-services sous un logiciel libre de type « Docker » fonctionnant sous Linux permettant de virtualiser des environnements et de lancer des applications créées dans des conteneurs logiciels, et utilisant pour les besoins de l'application de cartographie au moins six conteneurs exécutables pouvant être développés en JAVA parmi lesquels au moins un conteneur « production-module » contenant le code « production-module » de l'application de cartographie permettant d'instancier et/ou de supprimer à la volée des atlas de cartes sous forme de fichiers numériques rassemblés en pyramides de tuiles (7), ce conteneur permettant de traiter des fichiers sources Raster et vectoriels, ainsi que de créer des cartes et des atlas exports (15), **caractérisé en ce que** le conteneur « production-module » contient l'ensemble des scripts permettant de réaliser toutes les opérations de traitement de données cartographiques nécessaires au fonctionnement de l'appareil géomatique, tels que les différents scripts Python, l'utilitaire Osmosis ou les commandes d'appel de certaines fonctionnalités d'Osmosis, ainsi que l'appel de certaines commandes de l'utilitaire GDAL.

2. Appareil géomatique selon la revendication 1, comprenant au moins cinq conteneurs parmi lesquels :
Un conteneur « rest » contenant des services faisant des appels dans un conteneur « postgis » de la base de données (8),
Un conteneur Interface Homme Machine (IHM) contenant le code « IHM » de l'application permettant de mettre en œuvre des Actions définies telles que 'Ajout' pour ajouter un fichier, 'Supprimer' pour supprimer un fichier, ou encore d'autres Actions telles que communiquer avec le conteneur « rest » pour récupérer puis afficher différentes données ou communiquer avec des sites internet pour récupérer des fichiers de cartographie à ajouter à un fichier défini par la fonctionnalité 'Ajout',
Un conteneur « map-tile-server » contenant le code « map-tile-server » de l'application permettant de mettre en œuvre un serveur de tuiles à partir de fichiers vectoriels en format .map pour constituer un fichier numérique contenant un ensemble de fichiers numériques correspondant chacun à une tuile,
Un conteneur « ingestion module » contenant le code « ingestion module » de l'application permettant d'utiliser une commande Unix « inotifywait » (cmd Unix), la commande Unix « inotifywait » étant une fonction d'écoute pour vérifier (Listener checking) l'ajout de données brutes sous forme de nouveaux fichiers dans un répertoire donné (dans le cas présent : /geomatic/depot) ainsi que les métadonnées associées dont les géométries dans la base de données, constituant ainsi un référentiel des données ingérées utilisé pour créer, par agrégation, des cartes,
Un conteneur « postgis » contenant la base de données de l'appareil géomatique (postgres/postgis) permettant d'effectuer le contrôle « check », d'ingérer les fichiers attendus une fois qu'ils sont présents par téléchargement ou au moyen d'une clé USB, en exécutant des commandes spécifiques exécutées afin d'importer les fichiers dans le référentiel de l'application,
Un conteneur « log-dispatcher » contenant le code « log-dispatcher » de l'application permettant de surveiller un fichier de log et de le transmettre ligne par ligne au service REST du conteneur « rest ».

3. Appareil géomatique selon la revendication 1, **caractérisé en ce que** des logs d'info et de debug sont émises entre conteneurs afin de :
Confirmer la réception du .poly,
Informer du lancement du processus d'import du fichier .pbf,
Expliciter l'appel REST réalisé pour mettre à jour la base de données avec import du fichier,
Informer du statut de l'import du fichier (Succès ou Echec ou Attention).

4. Appareil géomatique selon la revendication 1, **caractérisé en ce que** le conteneur « production-module » contient un code permettant de mettre en œuvre les étapes du processus de génération de fichiers vectoriels de carte mis en œuvre par l'exécution du code du conteneur « production-module ».

5. Appareil géomatique selon la revendication 2, **caractérisé en ce que** le code pour mettre en œuvre le processus de génération de fichiers vectoriels comprend une première étape d'enregistrement ou de mise à jour de l'emprise du fichier dans une base de données « postgis » enregistrant les métadonnées associées aux données brutes enregistrées dans des répertoires.

6. Appareil géomatique selon la revendication 3, **caractérisé en ce que** le code pour mettre en œuvre le processus de génération de fichiers vectoriels comprend une deuxième étape de recherche de fichiers HGT représentant un format d'image Raster pour lesquels les valeurs des pixels ne décrivent pas une couleur d'image mais une hauteur de relief.

7. Appareil géomatique selon la revendication 4, **caractérisé en ce que** le code pour mettre en œuvre le processus de génération de fichiers vectoriels comprend une troisième étape de recherche de traits de côtes.

8. Appareil géomatique selon la revendication 5, **caractérisé en ce que** le code pour mettre en œuvre le processus de génération de fichiers vectoriels comprend une quatrième étape de génération de courbes de niveaux à partir des fichiers HGT extraits, au moyen de l'utilitaire GDAL pour générer des isolignes et des données insérées dans un fichier, par exemple de type .pbf.

9. Appareil géomatique selon la revendication 6, **caractérisé en ce que** le code pour mettre en œuvre le processus de génération de fichiers vectoriels comprend une cinquième étape de génération d'un fichier .map pour des courbes de niveau SRTM (Shuttle Radar Topography Mission) au moyen d'une commande « mapfile-writer » de l'utilitaire Osmosis exécutée pour générer un fichier .map à partir des informations SRTM extraites.

10. Appareil géomatique selon la revendication 7, **caractérisé en ce que** le code pour mettre en œuvre le processus de génération de fichiers vectoriels comprend une sixième étape de fusion d'un fichier OSM de base avec les traits de côtes par exécution de la commande Osmosis « merge » permettant d'obtenir un fichier « fusion.pbf ».

11. Appareil géomatique selon la revendication 8, **caractérisé en ce que** le code pour mettre en œuvre le processus de génération de fichiers vectoriels comprend une septième étape de génération d'un fichier .map au moyen d'une commande « mapfile-writer » de l'utilitaire Osmosis exécutée pour générer un fichier .map à partir du fichier « fusion ».

12. Appareil géomatique selon la revendication 9, **caractérisé en ce que** le code pour mettre en œuvre le processus de génération de fichiers vectoriels comprend une huitième étape comprenant les sous-étapes suivantes :
la génération d'une base adresse par exécution de multiples scripts Python extrayant les données concernant les villes, les rues et les numéros correspondants à des adresses et réalisant une correspondance géographique entre chacune de ces données,
la génération d'une base adresse SQLite de données relationnelles par exécution du script Python utilisé selon le type de fichier .csv ou .pbf utilisé en entrée,
la génération d'un fichier base adresse OSM transformant les adresses au format OSM en adresses au format SQLite, par exécution du script Python setosmfromadresses.py,
la génération d'un fichier base adresse au moyen d'une commande Osmosis exécutée avec des paramètres spécifiques à la génération du fichier base adresse,
la mise à jour d'un fichier d'adresses et/ou de points d'intérêts (address.poi, par exemple) obtenu par exemple par extraction des données adresses à partir des données vectorielles OSM et/ou grâce à une extraction des données à partir de fichiers standardisés, par exemple de type BAN (Base Adresse Nationale) ou BANO (Base d'Adresses Nationale Ouverte).

13. Appareil géomatique selon la revendication 10, **caractérisé en ce que** le code pour mettre en œuvre le processus de génération de fichiers vectoriels comprend une neuvième étape de génération d'une base .poi au moyen d'une commande Osmosis exécutée avec des paramètres spécifiques à la génération de la base .poi et par la mise à jour du fichier .poi obtenu grâce au fichier bounds créé à partir de l'enveloppe de l'emprise.

14. Procédé de génération de fichiers numériques vectoriels de carte selon la revendication 11 comprenant les étapes suivantes :
Ajout d'un fichier OSM, .pbf et .poly, dans un répertoire temporaire « geomatic/tmp/pbf » et « /poly » par action de l'utilisateur avec une Interface Homme-Machine (IHM) de l'appareil géomatique,
Recherche des fichiers HGT en intersection dans toutes les emprises,
Recherche des traits de côtes en intersection dans toutes les emprises,
Génération de courbes de niveaux (CDN) à partir de chaque fichier HGT extrait, le code du conteneur « production-module » lançant l'utilisation de l'utilitaire GDAL qui génère des isolignes et met à jour les données du fichier osm.pbf,
Génération du fichier .map pour les courbes de niveaux, le code du conteneur « production-module » lançant une commande de l'utilitaire Osmosis « mapfile-writer » dont l'exécution génère un fichier .map à partir des informations SRTM extraites,
Fusion du fichier OSM de base (osm.pbf ou osm.poly) avec les traits de côte par exécution de la commande « merge » de l'utilitaire Osmosis contenue dans le conteneur « production-module » permettant d'obtenir un fichier « fusion.pbf »,
Génération du fichier .map par exécution de la commande « mapfile-writer » de l'utilitaire Osmosis permettant de générer un fichier .map à partir du fichier « fusion »,
Génération de la base adresse par le lancement par le conteneur « production-module » de l'exécution de multiples scripts Python,
Génération de la base adresse SQLite par le lancement par le conteneur « production-module » d'un script Python utilisé en fonction du type de fichier (csv ou pbf) en entrée (getaddrfromcsv.py pour csv, ou getaddrfrompbf.py pour pbf),
Génération du fichier base adresse OSM par le lancement par le conteneur « production-module » du script Python setosmfromaddresses.py utilisé pour transformer les adresses au format OSM en adresses au format SQLite, Génération du fichier base adresse par le lancement par le conteneur « production-module » d'une commande de l'utilitaire Osmosis exécutée avec des paramètres spécifiques à la génération du fichier base adresse « address.poi »,
Lancement par le conteneur « production-module » d'une mise à jour du fichier « address.poi » obtenu grâce aux fichiers bounds créés à partir de l'enveloppe de l'emprise,
Génération de la base POI par le lancement par le conteneur « production-module » d'une commande de l'utilitaire Osmosis exécutée avec des paramètres spécifiques à la génération de la base .poi et la mise à jour du fichier.poi obtenu grâce aux fichiers bounds créés à partir de l'enveloppe de l'emprise,

15. Méthode ou procédé de conversion de formats de fichiers vectoriels, par exemple de type .pbf ou de type S57 dans un autre format compatible avec la pyramide de tuiles, comme par exemple en fichiers vectoriels .map comprenant un procédé de génération de fichiers numériques vectoriels de carte pour constituer une pyramide de tuiles (7) selon la revendication 14, mis en place par un utilisateur (1) n'ayant pas de connaissances spécifiques en Géomatique et utilisant l'appareil géomatique selon l'une des revendications précédentes.

16. Utilisation d'un ensemble de fichiers numériques constitués à partir des tuiles produites par le procédé selon la revendication 15 sur un terminal mobile intelligent de type smartphone ou tablette ou PC ou autre.
